# EUROPÄISCHE PATENTSCHRIFT

(11) **EP 1 975 537 B1**
(45) Veröffentlichungstag und Bekanntmachung des Hinweises auf die Patenterteilung: **11.01.2012**
(21) Anmeldenummer: 07021605.6
(22) Anmeldetag: 07.11.2007
(51) Int. Cl.: F28D 20/02, F27B 14/00, F27B 15/00

(54) **Verfahren zum kontinuierlichen Mischen und Schmelzen anorganischer Salze**
Method for continuous mixing and melting of inorganic salts
Procédé destiné au mélange continu et à la fusion de sels anorganiques

(30) Priorität: 24.03.2007 DE 102007014230
(43) Veröffentlichungstag der Anmeldung: 01.10.2008
(60) Teilanmeldung: 09013924.7
(73) Patentinhaber: Durferrit GmbH, 68169 Mannheim (DE)
(72) Erfinder: Michel, Heinrich, 69245 Bammental (DE); Trapp, Hans-Helmut, 63526 Erlensee (DE)
(74) Vertreter: Ruckh, Rainer Gerhard

(56) Entgegenhaltungen:
- JP-A- 11 325 739
- US-A- 4 042 318
- US-A1- 2005 005 646

## Beschreibung

Die Erfindung betrifft ein Verfahren zum kontinuierlichen Schmelzen anorganischer Salze.

Geschmolzene anorganische Salze der in Rede stehenden Art werden in unterschiedlichen industriellen Anlagen als Wärmespeichermedium oder Wärmeübertragungsmedium genutzt. Die geschmolzenen anorganischen Salze werden insbesondere zur Speicherung von Wärme in Solarkraftwerken oder anderen Wärmekraftanlagen zur Speicherung überschüssiger Wärme aus Abluftanlagen und zur Wärmeübertragung (Heizen) oder Wärmeabfuhr (Kühlung) in großtechnischen chemischen Reaktoren genutzt.

Geschmolzene Salze haben dabei gegenüber organischen Wärmespeicher- oder Wärmeübertragungsmedien den Vorteil, dass sie eine sehr hohe Wärmekapazität (spezifische Wärme) aufweisen und auch bei hohen Temperaturen aufgrund geringer Zersetzungsneigung und hoher Verdampfungspunkte einsetzbar sind. Weiterhin sind anorganische Salze preiswert und weltweit verfügbar.

Bei der Gewinnung elektrischer Energie in Solarkraftwerken, welche in jüngster Zeit einen erheblichen Aufschwung erfahren hat [Sonne, Wind und Wärme, 11 (2004) 54-56; http://www.solarmillennium.de] sind geschmolzene anorganische Salze als Wärmespeichermedien einsetzbar.

Dabei stellt die Speicherung solartechnisch gewonnener Wärmemengen eine besondere Herausforderung dar, weil die Erzeugung elektrischer Energie auch während der Nacht gewährleistet werden muss.

Zu diesem Zweck werden beispielsweise Gemische aus Kaliumnitrat (KN03) und Natriumnitrat (NaNO3) im Verhältnis 40 / 60 Gew. % (Schmelzpunkt ca. 250° C) in flüssiger Form eingesetzt, die in sehr großen, thermisch isolierten Speicherbehältern aufbewahrt werden. Das geschmolzene Salzgemisch wird tagsüber auf eine hohe Temperatur T₁, zum Beispiel 400° C, mit Hilfe der gebündelten Sonnenenergie aufgeheizt und in einem Heiß-Tank gelagert. Über Nacht wird die heiße Salzschmelze aus dem Heiß-Tank entnommen und über ein Wärmtauschersystem geleitet, wobei ein Teil der gespeicherten Wärme zur Gewinnung von Elektrizität mittels Dampfturbinen verbraucht wird. Dabei kühlt sich die Salzschmelze auf eine Temperatur T₂, zum Beispiel 290° C, ab und wird, immer noch flüssig, in einem Kalt-Tank bei ca. 290° C gelagert. Tagsüber wird diese Schmelze durch einen Teil der einstrahlenden Sonnenenergie wieder auf die hohe Temperatur von 400° C erhitzt, in den Heiß-Tank überführt und der Zyklus kann sich wiederholen.

Die Speichertanks kommerzieller Solarkraftwerke mit ca. 50 Megawatt Leistung fassen beispielsweise ungefähr 30.000 Tonnen der Speichersalzschmelze und haben Abmessungen in der Größenordnung von 30 m Durchmesser und 15 bis 20 m Höhe.

Für die Inbetriebnahme eines solchen Wärmespeichersystems muss das Salz beziehungsweise das Salzgemisch mindestens auf die Temperatur des Kalt-Tanks gebracht werden.

Für die Inbetriebnahme des Wärmespeichersystems eines Solarkraftwerks mit etwa 50 Megawatt Leistung bedeutet dies konkret, dass eine Masse von 30.000

Tonnen des oben genannten Kalium- / Natriumnitratgemischs auf 290 - 300° C erhitzt und in einem isolierten Speichertank aufbewahrt werden muss.

Für das Schmelzen so großer Mengen anorganischer Salze beziehungssweise Salzgemische aus den kristallinen Rohstoffen kann man herkömmliche Schmelzöfen oder eine Beheizung im Behälter nicht einsetzen. Das Aufschmelzen einer derartig großen Salzmenge im Behälter würde wegen der schlechten Wärmeleitung der kristallinen Rohstoffe nur zu lokalen Anschmelzungen führen beziehungsweise eine unrealistisch lange Zeitdauer erfordern, bis die gesamte Masse an Salz aufgeschmolzen wäre.

Aus der US 4 042 318 A ist ein Ofen zum Schmelzen von anorganischen Salzen bekannt, der einen inneren und äußeren Tank aufweist, die ineinander geschachtelt angeordnet sind. Zwischen den Wänden des Tanks befindet sich ein Heizmedium. Der Innenraum des inneren Tanks durch vertikale Trennwände unterteilt, um den Weg der Schmelze im Tank zu verlängern und dadurch eine Homogeniesierung der Schmelze zu bewirken.

Der Erfindung liegt die Aufgabe zugrunde, ein Verfahren bereitzustellen, mittels derer große Mengen an Salz geschmolzen werden können.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die Erfindung betrifft ein Verfahren zum kontinuierlichen Schmelzen anorganischer Salze. Das Verfahren umfasst die folgenden Verfahrensschritte: fortlaufende Zufuhr von festen Salzen über eine Zuführeinheit in einen Ofen, Erhitzen der Salze in dem Ofen und Generierung einer Strömung der Salze im Ofen mittels einer Umwälzeinheit. Die Strömung verläuft in vertikaler Richtung und ist nach oben gerichtet, wobei in diesem Bereich die Zufuhr der festen Salze erfolgt. Mittels der Strömung wird ein Zwei-Phasen-Bereich aus festem und geschmolzenem Salz und ein davon getrennter zweiter Bereich von einer auf eine Erwärmungstemperatur erhitzter Schmelze erzeugt. Parallel zur Zufuhr der festen Salze erfolgt mittels einer Entnahmeeinheit die Ausleitung von Schmelze aus dem zweiten Bereich.

Erfindungsgemäß erfolgt fortlaufend die Zufuhr von festen Salzen oder Salzgemischen in den Ofen der Ofenanlage und parallel hierzu, ebenfalls fortlaufend die Ausfuhr von Schmelze, das heißt geschmolzenem Salz. Die erfindungsgemäße Ofenanlage bildet somit ein Durchflusssystem, welches es ermöglicht, auch sehr große Mengen von Salz zu schmelzen.

Eine wesentliche Voraussetzung für die Funktion des erfindungsgemäßen Systems ist dabei die Trennung eines Zwei-Phasen-Bereichs aus festem und geschmolzenem Salz von einem zweiten Bereich mit der auf eine Erwärmungstemperatur erhitzten Schmelze. Dadurch ist gewährleistet, dass die über die Entnahmeeinheit aus dem zweiten Bereich entnommene Schmelze keine Bestandteile von nicht geschmolzenem Salz enthält, das heißt das zugeführte feste Salz wird im Zwei-Phasen-Bereich gehalten.

Ein wesentlicher Vorteil der Erfindung besteht darin, dass die Trennung des Bereichs der Schmelze von dem Zwei-Phasen-Bereich, in welchem die festen Salze enthalten sind, durch strömungstechnische Maßnahmen gewährleistet werden kann, so dass der mechanische Aufwand hierfür sehr gering gehalten werden kann.

Erfindungsgemäß wird mit der Umwälzeinheit im Zentrum des Ofens eine vertikal nach oben gerichtete, bevorzugt laminare Strömung erzeugt, mittels derer die über die Zuführeinheit zugeführten festen Salze in dem Zwei-Phasen-Bereich gehalten werden. In einer konstruktiv einfachen Ausgestaltung kann eine solche Strömung mit einer Umwälzeinheit in Form eines Rührwerks oder einer Pumpe generiert werden. Alternativ oder zusätzlich kann im Bodenbereich des Ofens eine Düsenanordnung vorgesehen sein, mittels derer ein nach oben gerichteter Gasstrom in den Ofen einleitbar ist. Zum Unterstützen dieser Strömung können vorteilhaft Leitelemente in den Ofen eingebracht werden. Im einfachsten Fall ist ein solches Leitelement von einem oben und unten offenen Leitzylinder gebildet, der die Umwälzeinheit umgibt und dessen Symmetrieachse vorzugsweise koaxial zur Symmetrieachse des Ofens ist. Die in vertikaler Richtung nach oben gerichtete Strömung wird durch den umgebenden Leitzylinder gebündelt und verstärkt. Der obere Rand des Leitzylinders wirkt zudem als Umlenkmittel, denn die über den Rand nach oben strömende Masse wird an diesem umgelenkt und strömt dann im Randbereich des Ofens nach unten.

Diese Strömung unterstützt weiterhin die Trennung des Bereichs der Schmelze vom Zwei-Phasen-Bereich. Dies beruht darauf, dass im zentralen Bereich des Ofens über die Zuführeinheit vorzugsweise über die Decke des Ofens zugeführte feste Salze zunächst in den Bereich der mit der Umwälzeinheit generierten Aufwärtsströmung gelangen und so in dem Zwei-Phasen-Bereich gehalten werden. Auch nach Umlenkung am oberen Rand des Zylinders bleiben die strömenden Partikel noch im Zwei-Phasen-Bereich. Durch die sich dadurch ergebende lange Verweilzeit der festen Salze im Zwei-Phasen-Bereich ist gewährleistet, dass diese vollständig geschmolzen sind, bis sie in den unterhalb des Zwei-Phasen-Bereichs liegenden zweiten Bereich gelangen. Somit ist gewährleistet, dass sich im zweiten Bereich eine reine Schmelze ohne feste Salze befindet.

Aus diesem Bereich erfolgt die Ausleitung der auf die gewünschte Erwärmungstemperatur erhitzten Schmelze. Im einfachsten Fall kann hierzu im Bodenbereich ein Auslass in Form eines Ventils vorgesehen sein, so dass die Schmelze dort entnommen werden kann. Aus Handhabungs- und Platzgründen ist es jedoch oft wünschenswert, den Auslass der Schmelze ebenso wie die Zufuhr der festen Salze über die Decke vorzunehmen. In diesem Fall werden zweckmäßig sondenartige, von oben in den zweiten Bereich ragende Entnahmeeinheiten wie Flüssigkeitsheber, insbesondere Mammutpumpen, eingesetzt.

Zur Kontrolle des Betriebs der Ofenanlage ist vorteilhaft eine Steuereinheit vorgesehen. In Abhängigkeit von in geeigneten Messsystemen generierten Eingangsgrößen wird mit der Steuereinheit sowohl die Zufuhr an festem Salz als auch die Entnahme an Schmelze gesteuert. Dabei kann sowohl die Zufuhr als auch die Entnahme kontinuierlich oder quasi kontinuierlich, das heißt in vorgegebenen Zeitintervallen erfolgen. Die Steuerung erfolgt bevorzugt derart, dass während des Betriebs der Ofenanlage die im Ofen enthaltene Masse an Salzen zumindest näherungsweise konstant bleibt. Weiterhin wird die Steuerung so durchgeführt, dass verhindert wird, dass ein Überschuss an festen Salzen im Verhältnis zum Anteil an Schmelze im Ofen entsteht.

Die Erfindung wird im Nachstehenden anhand der Zeichnungen erläutert. Es zeigen:
- Figur 1:: Längsschnitt durch eine Ausführungsform einer Ofenanlage zum Schmelzen und Mischen anorganischer Salze.
- Figur 2:: Querschnitt durch die Ofenanlage gemäß Figur 1.

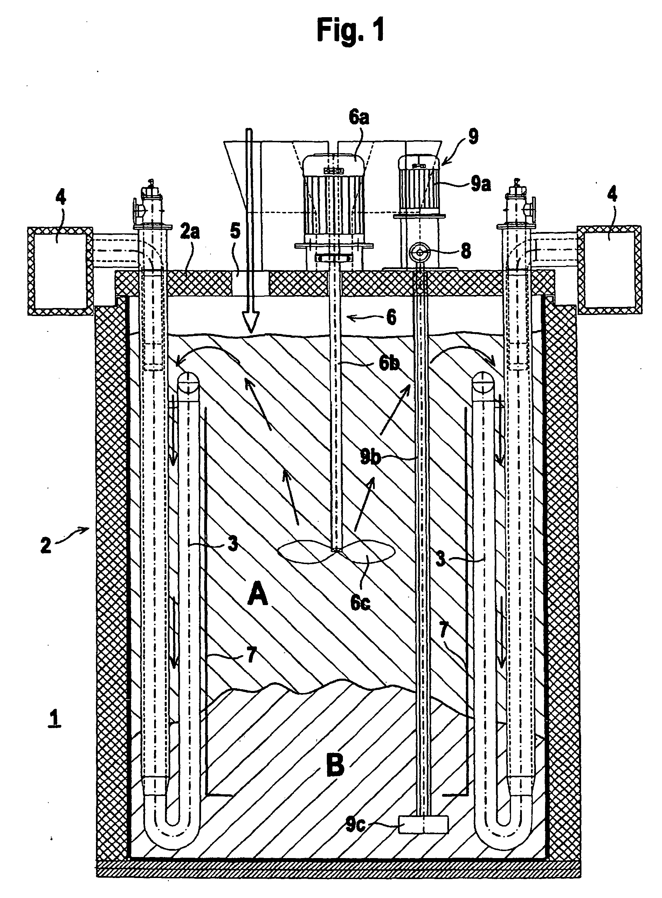

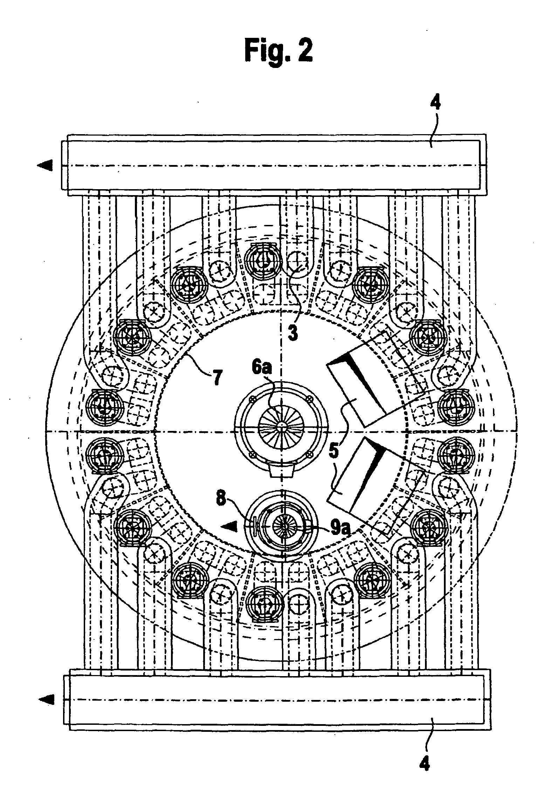

Die Figuren 1 und 2 zeigen ein Ausführungsbeispiel einer Ofenanlage 1 zum kontinuierlichen Mischen und Schmelzen von anorganischen Salzen. Im vorliegenden Fall erfolgt in der Ofenanlage 1 ein Schmelzen eines Salzgemischs aus Kalium- und Natriumnitrat im Verhältnis von 40/60 Gew. %. Die Ofenanlage 1 umfasst einen Ofen 2, in dem das Salzgemisch auf eine Erwärmungstemperatur von etwa 290° C erhitzt wird. Der Schmelzpunkt des Salzgemischs liegt bei 250° C.

Der Ofen 2 besteht im wesentlichen aus einem kreiszylindrischen Tiegel, der das Salzgemisch in seinem Innenraum aufnimmt. Zur Beheizung des Salze-mischs sind im vorliegenden Fall garbefeverte Rohrheiz-Köper, Sogenamnte Strahlungsrohre vorgesehen, welche zur Ableitung des Gases an Abgasrohre 4 angeschlossen sind. Die Rohrheizkörper 3 befinden sich im Innenraum des Ofens 2 und bilden dort eine ringförmige, zum Zentrum des Ofens 2 drehsymmetrische Anordnung. Dabei sind die Rohrheizkörper 3 dicht vor den Innenseiten der Seitenwände des Ofens 2 angeordnet.

Alternativ oder zusätzlich kann der Ofen 2 auch durch außerhalb des Ofens 2 angeordnete Heizelemente beheizt werden. Generell kann die Beheizung des Ofens 2 mittels Gas, Öl, Schweröl oder elektrischer Energie erfolgen.

Die Zugabe von kristallinem oder geprilltem Salz erfolgt über Einfüllöffnungen 5 in der Decke 2a des Ofens 2. Die Zufuhr der festen Salze erfolgt über eine nicht gesondert dargestellte Zuführeinheit, die von Dosierschnecken, Vibrationsdosiereinrichtungen, Bandförderern oder Kettenförderern gebildet sein kann. Die einzelnen Salze können getrennt oder vorgemischt über die Zuführeinheit in den Ofen 2 eingeführt werden.

In dem Ofen 2 ist weiter eine Umwälzeinheit integriert, mittels derer die vollständige Durchmischung der in den Ofen 2 eingeführten Salze erfolgt. Die Umwälzeinheit ist im vorliegenden Fall von einem Rührwerk 6 gebildet, das einen auf der Decke 2a des Ofens 2 aufsitzenden Antrieb 6a und eine von diesem ausgehende, in den Ofen 2 ragende, Welle 6b aufweist, an deren freiem Ende ein Rührwerkzeug 6c angeordnet ist, welches über den Antrieb 6a in eine Drehbewegung versetzt wird. Die Welle 6b verläuft in der Symmetrieachse des Ofens 2. Anstelle eines Rührwerks kann auch eine Pumpe eingesetzt werden. Alternativ oder zusätzlich kann die Umwälzeinheit eine im Bodenbereich des Ofens 2 angeordnete Düsenanordnung aufweisen, mittels derer im Ofen 2 ein vertikal nach oben gerichteter Gasstrom, vorzugsweise Luftstrom, erzeugt wird. Die Düsenanordnung ist bevorzugt symmetrisch zur Symmetrieachse des Ofens 2 ausgebildet.

Allgemein wird mit der Umwälzeinheit innerhalb des Ofens 2 eine laminare und vertikal nach oben gerichtete Strömung erzeugt. Zur Verstärkung und Unterstützung dieser Strömung ist als Leitelement ein an der Ober- und Unterseite offener Leitzylinder 7 vorgesehen, welcher koaxial zur Welle 6b des Rührwerks 6 angeordnet ist. Die Richtung der mit der Umwälzeinheit generierten Strömung ist in Figur 1 mit Pfeilen gekennzeichnet. Im Zentrum des Ofens 2, innerhalb des Leitzylinders 7 wird die vertikal nach oben gerichtete Strömung generiert. Das nach oben strömende Salzgemisch umströmt den oberen Rand des Leitzylinders 7. Dort erfolgt eine Umlenkung der Strömung, so dass in den Randbereichen des Ofens 2 eine abwärts gerichtete Strömung entsteht.

Mittels der durch die Umwälzeinheit generierten Strömung erfolgt nicht nur die vollständige Durchmischung des Salzgemischs. Zudem erfolgt dadurch eine Trennung eines Zwei-Phasen-Bereichs aus festem und geschmolzenem Salz (in Figur 1 bezeichnet mit A) von einem darunter liegenden zweiten Bereich mit homogener und vollständig durchmischter Schmelze (in Figur 1 bezeichnet mit B). Diese Trennung wird deshalb erzielt, da die festen Salze über die Einfüllöffnungen 5 im Bereich der aufwärts gerichteten Strömung in den Ofen 2 eingeleitet werden. Durch diese aufwärts gerichtete Strömung werden die festen Salze im Zwei-Phasen-Bereich gehalten und können vollständig schmelzen, bevor sie über die Abwärtsströmung in den Randbereichen des Ofens 2 in den zweiten Bereich gelangen können.

Die Trennung der beiden Bereiche kann durch die Richtung und Stärke, das heißt Geschwindigkeit der Strömung gezielt vorgegeben werden. Einstellparameter hierfür sind im vorliegenden Fall die Dimensionierung des Rührwerks 6 und des Leitzylinders 7.

Die Schmelze wird aus dem zweiten Bereich mittels einer Entnahmeeinheit ausgeleitet. Im einfachsten Fall kann hierzu im Bodenbereich des Ofens 2 ein Ventil angeordnet sein, über welches die Schmelze ausgeleitet wird. Im vorliegenden Fall ist die Entnahmeeinheit so ausgebildet, dass die Schmelze über eine Auslassöffnung 8 an der Decke 2a des Ofens 2 ausgeführt wird. Die Entnahmeeinheit kann in Form eines Flüssigkeitshebers, wie zum Beispiel einer Mammutpumpe, ausgebildet sein. Im vorliegenden Fall ist die Entnahmeeinheit als Kreiselpumpe 9 ausgebildet. Diese weist einen Antrieb 9a auf, sowie wenigstens ein Rohr 9b in welches über eine Sonde 9c Schmelze aus dem Bodenbereich des Ofens 2 eingeführt und dann nach oben abgepumpt wird.

Der Betrieb der Ofenanlage 1 wird über eine nicht dargestellte zentrale Steuereinheit gesteuert. Zunächst erfolgt mittels der Steuereinheit eine Temperatursteuerung, um die Schmelze auf die gewünschte Erwärmungstemperatur zu erhitzen. Als Temperaturmesseinheit sind innerhalb des Ofens 2 Thermoelemente vorgesehen, um insbesondere im zweiten Bereich die Temperatur der Schmelze zu erfassen. In Abhängigkeit der Messwerte der Thermoelemente wird die Heizleistung der Rohrheizkörper 3 gesteuert.

Weiterhin erfolgt mittels der Steuereinheit die Steuerung der über die pro Zeiteinheit zugeführten Menge an festen Salzen sowie die pro Zeiteinheit ausgeleiteten Menge an homogener Schmelze. Die Ofenanlage 1 wird dabei derart in einem Durchflussbetrieb betrieben, dass parallel fortlaufend eine Zufuhr von festen Salzen in den Ofen 2 und eine Ausleitung von Schmelze aus dem Ofen 2 erfolgt. Die Zufuhr- und Ausleitungsprozesse können kontinuierlich oder quasikontinuierlich, das heißt innerhalb vorgegebener Zeitintervalle erfolgen.

Als erste Eingangsgrößen für die Steuerung werden die über die Zuführeinheit pro Zeiteinheit dem Ofen 2 zugeführten Massen an festem Salz bestimmt. Als Messsysteme können hierbei gravimetrische oder volumetrische Messeinheiten, insbesondere Wägezellen in der Zuführeinheit vorgesehen sein. Als zweite Eingangsgröße für die Steuerung wird die über die Entnahmeeinheit pro Zeiteinheit ausgeführte Masse der Schmelze bestimmt. Im vorliegenden Fall wird hierzu die Leistungsaufnahme der Kreiselpumpe 9 bestimmt. Generell kann auch die Strömungsgeschwindigkeit der ausgeleiteten Schmelze als Messgröße bestimmt werden. Schließlich wird als weitere Eingangsgröße das Gesamtgewicht des Ofens 2 mit der darin enthaltenen Schmelze bestimmt. Hierzu ist eine Wägeeinheit, beispielsweise in Form von Wägezellen vorgesehen.

Die Zuführeinheit und die Entnahmeeinheit werden über die Steuereinheit so gesteuert, dass das Gewicht des Ofens 2 und damit die Masse der im Ofen 2 enthaltenen Schmelze zumindest näherungsweise konstant bleibt.

Weiterhin erfolgt mittels der Steuereinheit die Steuerung der Zuführeinheit und der Entnahmeeinheit derart, dass die pro Zeiteinheit zugeführten Massen an Salzen und die pro Zeiteinheit ausgeleitete Masse an Schmelze bezogen auf die Gesamtmasse im Ofen 2 im Verhältnis zur Zeit die benötigt wird, die festen Salze zu schmelzen, einen vorgegebenen Grenzwert nicht überschreitet. Damit wird verhindert, dass zuviel festes Salz in den Ofen 2 eingefüllt wird, was zu einer unerwünschten Beeinträchtigung des zweiten Bereichs der homogenen Schmelze im Ofen 2 führen würde.

Für das vorliegende Ausführungsbeispiel und ein typisches Fassungsvermögen des Ofens 2 in der Größenordnung von 60 Tonnen hat es sich als vorteilhaft erwiesen, wenn die pro Stunde zugeführte Masse an festen Salzen und die gleichzeitig dem Ofen 2 pro Stunde entnommene Masse an Schmelze 100 Gew. % (das heißt eine komplette Ofenfüllung), vorzugsweise 25 Gew. % des Inhalts des Ofens 2 nicht überschreiten. Im vorliegenden Fall erfolgt die Steuerung derart, dass die pro Stunde zugeführte Masse an Salzen sowie die pro Stunde abgepumpte Masse an Schmelze jeweils 15 Tonnen beträgt.

## Patentansprüche

1. Verfahren zum kontinuierlichen Schmelzen anorganischer Salze, umfassend folgende Verfahrensschritte:
fortlaufende Zufuhr von festen Salzen über eine Zuführeinheit in einen Ofen (2),
Erhitzen der Salze in dem Ofen (2),
Generierung einer Strömung der Salze im Zentrum des Ofens (2) mittels einer Umwälzeinheit, welche in vertikaler Richtung verläuft und nach oben gerichtet ist, wobei in diesem Bereich die Zufuhr fester Salze über die Zuführeinheit erfolgt, und wobei mittels der Strömung ein Zwei-Phasen-Bereich aus festem und geschmolzenem Salz und ein davon getrennter zweiter Bereich von einer auf eine Erwärmungstemperatur erhitzter Schmelze erzeugt wird,
und parallel zur Zufuhr der festen Salze erfolgende Ausleitung von Schmelze aus dem zweiten Bereich mittels einer Entnahmeeinheit.

2. Verfahren nach Anspruch 1, **dadurch gekennzeichnet, dass** im Ofen (2) Salzgemische geschmolzen werden, wobei die einzelnen Salze getrennt oder vorgemischt mittels der Zuführeinheit in den Ofen (2) eingeleitet und dort mittels der Umwälzeinheit vollständig durchmischt werden.

3. Verfahren nach Anspruch 2, **dadurch gekennzeichnet, dass** im zweiten Bereich das Salzgemisch vollständig durchmischt und geschmolzen vorliegt.

4. Verfahren nach einem der Ansprüche 2 oder 3, **dadurch gekennzeichnet, dass** als Salze Kaliumnitrat und Natriumnitrat verwendet werden.

5. Verfahren nach einem der Ansprüche 1 bis 4, **dadurch gekennzeichnet, dass** die Trennung der Bereiche durch die Stärke der Strömung und/oder mechanische Einbauten im Ofen (2) zur Strömungsführung bestimmt wird.

6. Verfahren nach Anspruch 5, **dadurch gekennzeichnet, dass** in den Randbereichen des Ofens (2) eine abwärts gerichtete Strömung erzeugt wird.

7. Verfahren nach einem der Ansprüche 1 bis 6, **dadurch gekennzeichnet, dass** mittels der Umwälzeinheit eine laminare Strömung erzeugt wird.

8. Verfahren nach einem der Ansprüche 5 bis 7, **dadurch gekennzeichnet, dass** der zweite Bereich der Schmelze unterhalb des Zwei-Phasen-Bereichs liegt.

9. Verfahren nach einem der Ansprüche 1 bis 8, **dadurch gekennzeichnet, dass** die Zufuhr der festen Salze und die Entnahme der Schmelze kontinuierlich oder in vorgegebenen Zeitintervallen erfolgen.

10. Verfahren nach einem der Ansprüche 1 bis 9, **dadurch gekennzeichnet, dass** die dem Ofen (2) pro Zeiteinheit zugeführte Masse an festen Salzen und die dem Ofen (2) pro Zeiteinheit entnommene Masse an Schmelze so gesteuert werden, dass das Gesamtgewicht der im Ofen (2) enthaltenen Salzmenge zumindest näherungsweise konstant bleibt.

11. Verfahren nach einem der Ansprüche 1 bis 10, **dadurch gekennzeichnet, dass** die dem Ofen (2) pro Stunde zugeführte Masse an festen Salzen und die gleichzeitig dem Ofen (2) pro Stunde entnommene Masse an Schmelze 100 Gew. % des Inhalts des Ofens (2), das heißt eine Ofenfüllung nicht überschreiten.

12. Verfahren nach Anspruch 11, **dadurch gekennzeichnet, dass** die dem Ofen (2) pro Stunde zugeführte Masse an festen Salzen und die gleichzeitig dem Ofen (2) pro Stunde entnommene Masse an Schmelze 25 Gew. % des Inhalts des Ofens (2) nicht überschreiten.

## Claims

1. Method for continuous melting of inorganic salts, comprising the following method steps:
continuous feed of solid salts by way of a feed unit to a furnace (2),
heating the salts in the furnace (2),
generating a flow of the salts in the centre of the furnace (2) by means of a circulating unit, which runs in vertical direction and is directed upwardly, wherein the feed of solid salts is carried out by way of the feed unit in this region and wherein a two-phase region of solid and molten salt and a second region separate therefrom is produced from a melt, which is heated to a heating temperature, by means of the flow, and
conducting of melt out of the second region by means of an extraction unit parallelly to the feed of the solid salts.

2. Method according to claim 1, **characterised in that** salt mixtures are melted in the furnace (2), wherein the individual salts are introduced - separately or premixed - into the furnace (2) by means of the feed unit and are completely thoroughly mixed there by means of the circulating unit.

3. Method according to claim 2, **characterised in that** the salt mixture is present completely thoroughly mixed and melted in the second region.

4. Method according to one of claims 2 and 3, **characterised in that** potassium nitrate and sodium nitrate are used as salts.

5. Method according to any one of claims 1 to 4, **characterised in that** the separation of the regions is determined by the strength of the flow and/or mechanical installations in the furnace (2) for flow guidance.

6. Method according to claim 5, **characterised in that** a downwardly directed flow is generated in the edge regions of the furnace (2).

7. Method according to any one of claims 1 to 6, **characterised in that** a laminar flow is generated by means of the circulating unit.

8. Method according to any one of claims 5 to 7, **characterised in that** the second region of the melt lies below the two-phase region.

9. Method according to any one of claims 1 to 8, **characterised in that** the feed of the solid salts and the extraction of the melt takes place continuously or at predetermined intervals in time.

10. Method according to any one of claims 1 to 9, **characterised in that** the mass of solid salts fed to the furnace (2) per unit of time and the mass of melt removed from the furnace (2) per unit of time are so controlled that the total weight of the salt quantity contained in the furnace (2) remains at least approximately constant.

11. Method according to any one of claims 1 to 10, **characterised in that** the mass of solid salts fed to the furnace (2) per hour and the mass of melt removed at the same time from the furnace (2) per hour do not exceed 100 weight % of the content of the furnace (2), i.e. a furnace filling.

12. Method according to claim 11, **characterised in that** the mass of solid salts fed to the furnace (2) per hour and the mass of melt removed at the same time from the furnace (2) per hour do not exceed 25 weight % of the content of the furnace (2).

## Revendications

1. Procédé de fusion en continu de sels inorganiques, comprenant les étapes de procédé suivantes :
chargement en continu dans un four (2) de sels solides via une unité de chargement ;
chauffage des sels dans le four (2) ;
génération d'un courant des sels au centre du four (2) au moyen d'une unité de circulation qui s'étend dans la direction verticale et est orientée vers le haut, où dans cette zone, l'apport en sels solides se fait via l'unité de chargement, et où au moyen du courant est générée une zone à deux phases d'un sel solide et fondu, et
une seconde zone, séparée de la première, d'une masse fondue chauffée à une température d'échauffement,
et sortie, se faisant parallèlement au chargement des sels solides, de la matière fondue depuis la seconde zone au moyen d'une unité de prélèvement.

2. Procédé selon la revendication 1, **caractérisé en ce que** dans le four (2) sont fondus des mélanges de sels, les différents sels étant introduits dans le four (2) séparément ou pré-mélangés au moyen de l'unité de chargement et y étant mélangés entièrement au moyen de l'unité de circulation.

3. Procédé selon la revendication 2, **caractérisé en ce que** le mélange de sels se présente dans la seconde zone entièrement mélangé et fondu.

4. Procédé selon l'une des revendications 2 ou 3, **caractérisé en ce que** l'on utilise comme sels du nitrate de potassium et du nitrate de sodium.

5. Procédé selon l'une des revendications 1 à 4, **caractérisé en ce que** la séparation des zones est déterminée par l'intensité du courant et/ou par des chicanes mécaniques dans le four (2) pour diriger le courant.

6. Procédé selon la revendication 5, **caractérisé en ce que** dans les zones de bordure du four (2) est généré un courant dirigé vers le bas.

7. Procédé selon l'une des revendications 1 à 6, **caractérisé en ce qu'**un courant laminaire est généré au moyen de l'unité de circulation.

8. Procédé selon l'une des revendications 5 à 7, **caractérisé en ce que** la seconde zone de la masse fondue repose sous la zone à deux phases.

9. Procédé selon l'une des revendications 1 à 8, **caractérisé en ce que** le chargement des sels solides et le prélèvement de la masse fondue se font en continu ou selon des intervalles de temps prédéfinis.

10. Procédé selon l'une des revendications 1 à 9, **caractérisé en ce que** la masse des sels solides introduite dans le four (2) par unité de temps et la masse de matière fondue prélevée du four (2) par unité de temps sont commandées de façon telle que la masse totale de la quantité de sels contenue dans le four (2) reste au moins approximativement constante.

11. Procédé selon l'une des revendications 1 à 10, **caractérisé en ce que** la masse des sels solides introduite dans le four (2) par heure et la masse de matière fondue prélevée simultanément du four (2) par heure ne dépassent pas 100 % du contenu du four (2), à savoir une charge de four.

12. Procédé selon la revendication 11, **caractérisé en ce que** la masse des sels solides introduite dans le four (2) par heure et la masse de matière fondue prélevée simultanément du four (2) par heure ne dépassent pas 25 % du contenu du four (2).
